# EUROPEAN PATENT APPLICATION

(11) **EP 1 146 324 A1**
(43) Date of publication of application: **17.10.2001**
(21) Application number: 01107894.6
(22) Date of filing: 11.04.2001
(51) Int. Cl.: G01J 1/42, G02B 5/20

(54) **Light guiding uv filter for blocking solar radiation**

(30) Priority: 14.04.2000 US 549650
(71) Applicant: ALLIANT TECHSYSTEMS INC., Hopkins, MN 55343-8384 (US)
(72) Inventor: Anderssen, Clarence C., 33764 Clearwater (US); Jensen, Russel C., 84117 Salt Lake City (US)
(74) Representative: Altenburg, Udo, Dipl.-Phys.

(57) **Abstract**

An optical filter assembly (10) for detecting a UV light comprising an afocal lens (40,42), a plurality of different reflective cylindrical shaped filter elements (14,16,18) and a detector (24). Each of the filter elements having reflective edges and being arranged to form a light reflective pipe. The afocal lens, the light reflecting pipe and a detector constructed and arranged so that on-axis light passing through the afocal lens will travel directly through the plurality of filter elements to the detector and off-axis light passing through the afocal lens will be reflected off of at least one of the reflective edges of at least one of the plurality of filter elements toward the detector.

## Description

### CROSS-REFERENCE TO RELATED APPLICATIONS

Not Applicable

### STATEMENT REGARDING FEDERALLY SPONSORED RESEARCH

Not Applicable

### BACKGROUND OF THE INVENTION

This invention relates to a reflective UV light filter system and more particularly to a solar blind UV filter which relies on reflective coatings and/or total internal reflections on the side of filter elements to fold off-axis energy back onto a detector.

Numerous optical filters, including solar blind filters have been disclosed. For example Kraushaar et al, in U.S. 4,597,629 discloses a solar blind ultraviolet filter comprised of multiple filter elements for absorbing on-axis ultraviolet light.

Some other examples of various light filters include U.S. Pat. No. 4,070,101 which discloses a wide angle narrow bandpass optical filter including multiple absorption materials in a common path. Langberg in U.S. Pat. No. 3,190,172 employs a transparent scattering cell containing sodium vapor. The absorption of spectral radiation produces a resonance radiation (i.e., the absorption of photons of a specific wavelength and the re-emission of photons of the same or other wavelengths) within the cell.

Problems remain with prior art filters such as these. First, many prior art filters are directed exclusively to the absorption and/or transmission of light which passes through the filter on-axis. That is to say, many prior art devices lack the ability to obtain a desired wide angle view because they lack the capability to absorb and detect light which may enter the filter from an off-axis angle. Second, prior art filters which may be capable of absorbing off-axis energy are relatively large, of fixed configuration and relatively rigid. Third, many prior art filters lack sufficient optical density to achieve a sufficiently steep band-edge characteristic.

In order to overcome the shortcomings described above, the present reflective UV filter for blocking solar radiation is constructed and arranged to utilize a wide angle of incoming energy. Specifically, the preferred embodiment of the invention has an angle performance of greater than ± 40 degrees. The present invention further includes a unique optical filter assembly arrangement which allows the filter assembly to require only a 1 inch diameter. The present UV filter assembly also utilizes a two-element afocal lens and at least three all-flat filter elements to provide the filter with an extremely steep cut off.

The features and benefits described above, as well as others, will be disclosed in greater detail below.

The entire content of all of the patents listed within the present patent application are incorporated herein by reference.

### BRIEF SUMMARY OF THE INVENTION

This invention provides for a reflective UV filter for blocking solar radiation which in the preferred embodiment includes a cylindrical optical filter assembly which is made up of at least three different disk shaped filter elements. Each of the filter elements has different wavelength absorption and transmission characteristics and have reflective edges for reflecting off-axis light. The filter elements are arranged in a tubular light pipe configuration. The reflective edges of the filter elements allow light to be reflected from a wide range of off-axis angles onto a detector surface. The optical filter assembly preferably incorporates an afocal lens which incoming light must initially pass through as well as a pair of interference filters. The detector is preferably a photo-multiplier equipped with a photocathode.

By utilizing the various elements mentioned above and arranging the reflective filter elements in a light pipe arrangement, the present invention is able to achieve the desired detection and angular responses with only a 1 inch diameter optical filter assembly. The unique construction and arrangement of the present invention is depicted in the following figures and shall be discussed in greater detail below.

### BRIEF DESCRIPTION OF THE SEVERAL VIEWS OF THE DRAWINGS

A detailed description of the invention is hereafter described with specific reference being made to the drawings in which:
FIG. 1 is a perspective view of a first embodiment of the invention;
FIG. 2 is a perspective view of a second embodiment of the invention;
FIG. 3 is a perspective view of a third embodiment of the invention;
FIG. 4 is a perspective view of a forth embodiment of the invention; and
FIG. 5a is a diagram which illustrates the path of travel for on-axis light passing through the invention.
FIG. 5b is a diagram which illustrates the path of travel for off-axis light passing through the invention.

### DETAILED DESCRIPTION OF THE INVENTION

As may be seen in the various figures included herein the present invention is directed to a reflective ultra-violet (UV) light filter for blocking solar radiation or optical filter assembly.

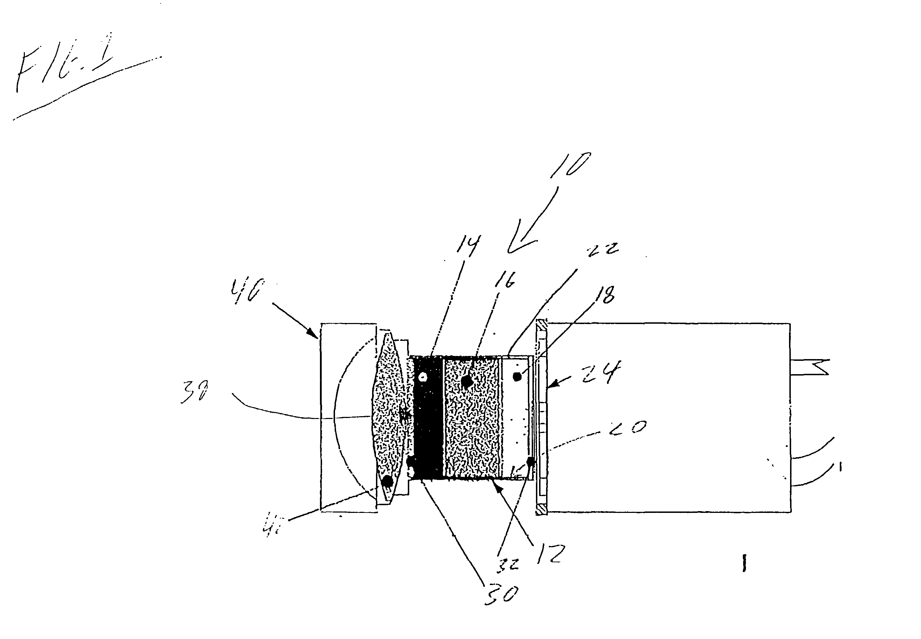

In a first embodiment shown in FIG. 1 the present optical filter assembly (OFA) 10 has a compact substantially cylindrical shape. The major feature of the OFA 10 is the tubular light pipe 12 which includes at least three disk shaped filter elements 14, 16, 18. On the outside edge 20 of each of the filter elements 14, 16, 18 a light reflective coating 22 is applied. The reflective coating 22 allows light which impacts the outside edge 20 to be reflected through the remaining filter elements and onto a detector 24.

First filter element 14 may be constructed from a variety of materials but is preferably at least partially constructed from doped Calcium Fluoride. The actual composition of first filter element 14 is based on ability of the first filter element 14 to provide the OFA 10 with an extremely steep cut off, allowing enhanced signal transmission without transmitting out of band energy. In a specific embodiment the first filter element 14 provide the OFA 10 with a steep band-edge, by specifically providing a change in optical density from 1.0 to 10 in 10 nm. The first filter element is approximately 6 mm thick and is preferably comprised of doped Calcium Fluoride with an optical density of less than 0.1.

Second and third filter elements 16 and 18 function to block visible and near UV light. Like the first filter element 14, the second filter element 16 and third filter element 18 may be comprised of a wide variety of materials. Preferably, the second filter element is comprised of a metal salt that remains physically and optically stable at temperatures up to 100 degrees Celsius, while the third filter element is preferably comprised of colored glass.

First filter element 14 is immediately adjacent to a first interference filter 30. In the embodiment shown in FIG. 1 the OFA 10 is equipped with two interference filters 30 and 32 which constrains the angle of performance of the OFA 10 to an angle of performance of ±40 degrees. The interference filters 30 and 32 employ two filter coatings, one which blocks energy incident at angles from 0 to 20 degrees and a second coating which blocks energy incident at angles from 20 to 40 degrees.

The interference filters 30 and 32 have a optical density of greater than 5 over the 50 nm blocking bandwidth and allow greater than 80% in-band UV light transmission.

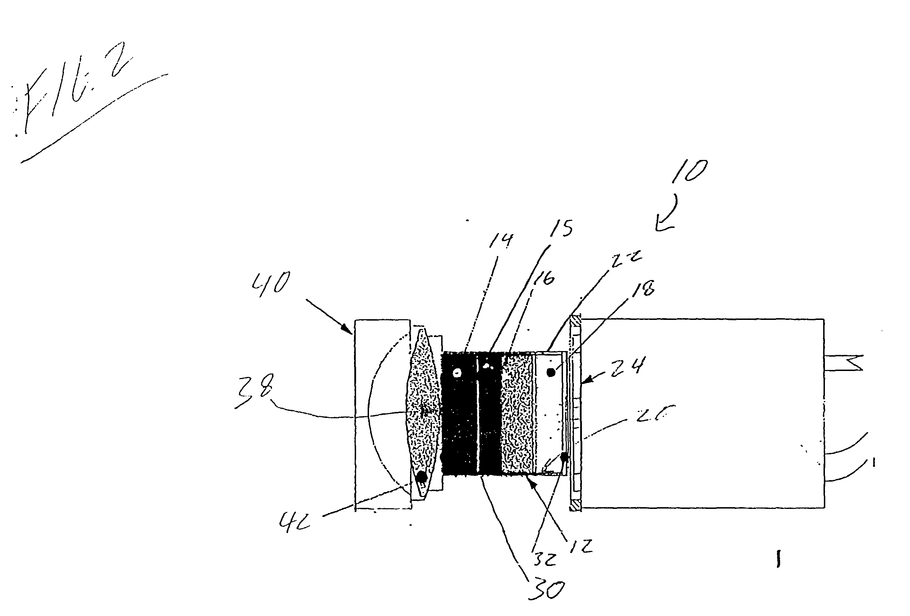

In a preferred embodiment of the invention shown in FIG. 2, the OFA 10 may be equipped with an additional filter element 15. As previously indicated, filter element 15 may be constructed of Calcium Fluoride. In this embodiment the first filter element 30 is positioned between first filter elements 14 and 15.

To reduce the angles seen by the interference filters 30 and 32 the light receiving end 38 of the OFA 10 is equipped with an afocal lens 40 and 42.

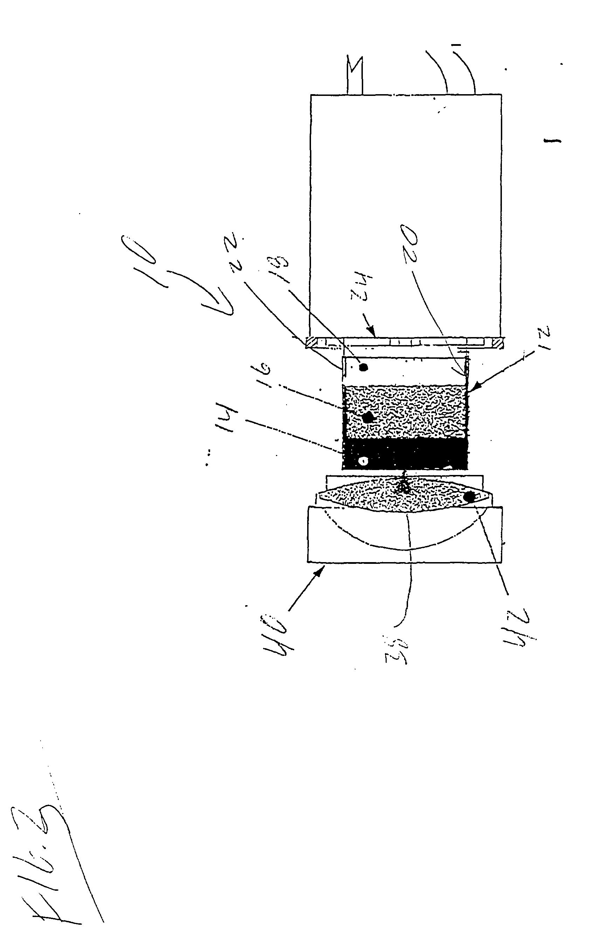

As may be seen in the embodiment shown in FIG. 3, the OFA 10 may also be configured without the interference filters 30 and 32. The absence of the interference filters allows the OFA to detect UV light over a wider field of view but with a decreased ability to block undesired frequencies of light.

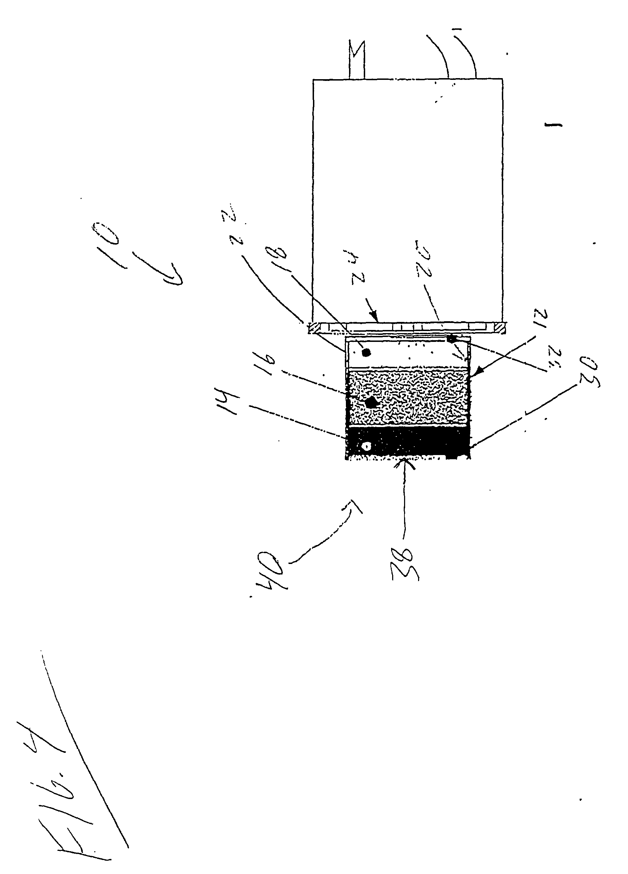

As may be seen in the embodiment shown in FIG. 4, the OFA 10 may also lack an afocal lens. In the present embodiment the OFA 10 has a reduced capacity to detect off-axis light, but retains all other desired filtering capabilities.

The present filter may have additional filter elements than those described herein. Furthermore the filter elements may be arranged in a different order than stated herein. An inventive aspect of the present UV filter is the ability to block undesired frequencies of light while detecting UV light over a wide range of angles using a very compact light pipe structure assembly which has an optical diameter of approximately 1 inch.

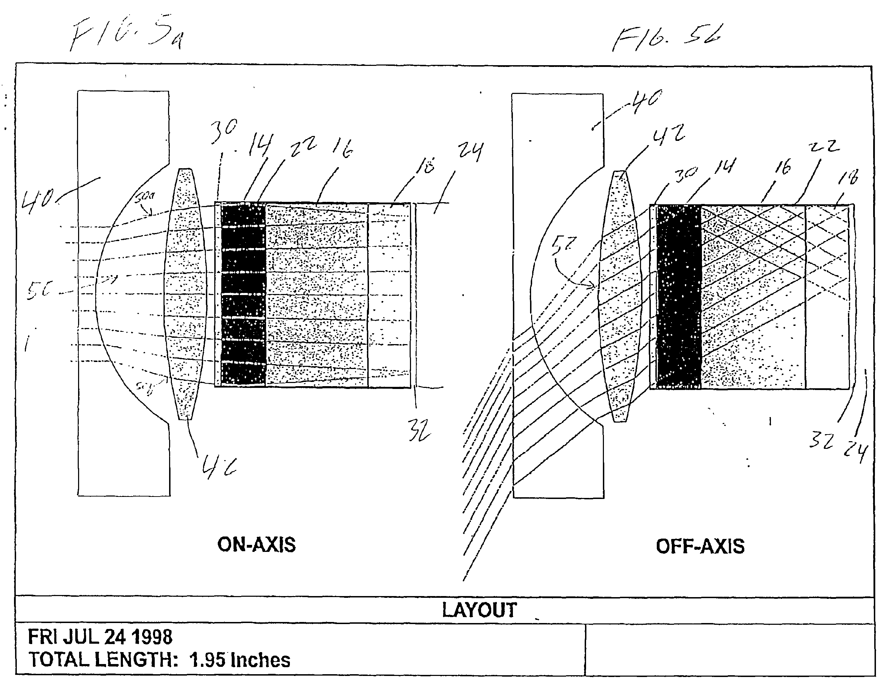

As may be seen in the diagrams shown in FIGs. 5a and 5b the present invention utilizes the reflective coating 22 on the various filter elements 14, 16, 18 to form a light pipe 12 which allows both on-axis and off-axis light to pass through all of the filter elements and be directed on to the surface of a detector 24.

The detector 24 is shown in the various figures and may be embodied in a variety of different optical detector devices as may be known in the art. Preferably, detector 24 is comprised of a photo-multiplier equipped with a photocathode or similar device.

Turning back to FIGs. 5a and 5b, these diagrams illustrate the path of light passing into the OFA from both an on-axis view and off-axis view respectively. As seen in FIG 5a, on- axis light represented by lines 50 enter the light receiving end 38 of the OFA 10 by passing through the afocal lens 42. Light (indicated by lines 50a and 50b) which enters the light pipe 12 near the periphery of the afocal lens 42 may be deflected so as to be directed toward the reflective silvered surface 22 of the light pipe 12. After being directed toward the reflective surface 22, light rays 50a and 50b are reflected by the surface 22 back into and passed through all of the filter elements of the OFA 10.

The effect of reflecting light from the reflective surface 22 back into the OFA 10, in order to pass incoming light through all of the filter elements 14, 16, and 18 as well as the interference filters 30 and 32, is even more pronounced for off-axis light as seen in FIG 5b. FIG. 5b illustrates the reflection of light (indicated by lines 52) off of the reflective surface 22.

Whether light is on-axis or off-axis, as light travels through the OFA 10 the reflective coating 22 of the light pipe 12 ensures that all light is forced to travel through all of the filter elements 14, 16 and 18 to ensure uniform blocking of undesired frequencies and optimal reception of UV light on the surface of the detector 24.

In addition to being directed to the embodiments described above and claimed below, the present invention is further directed to embodiments having different combinations of the features described above and claimed below. As such, the invention is also directed to other embodiments having any other possible combination of the dependent features claimed below.

The above examples and disclosure are intended to be illustrative and not exhaustive. These examples and description will suggest many variations and alternatives to one of ordinary skill in this art. All these alternatives and variations are intended to be included within the scope of the attached claims. Those familiar with the art may recognize other equivalents to the specific embodiments described herein which equivalents are also intended to be encompassed by the claims attached hereto.

## Claims

1. An optical filter assembly for detecting a predetermined spectrum of light comprising:
a plurality of different reflective cylindrical shaped filter elements, each of the filter elements having reflective edges, the plurality of filter elements constructed and arranged to form a light reflective pipe, the light reflective pipe having a light entry end and a light detecting end;
an afocal lens, the afocal lens associated with the light entry end; and
a detector, the detector associated with the light detecting end;
the afocal lens, the light reflecting pipe and the detector constructed and arranged so that on-axis light passing through the afocal lens will travel directly through the plurality of filter elements to the detector, and off-axis light passing through the afocal lens will be reflected off of the reflective edges of at least one of the plurality of filter elements toward the detector.

2. The optical filter assembly of claim 1 further comprising an optical diameter of approximately 1 inch.

3. The optical filter assembly of claim 1 wherein the detector is a photocathode of a photo-multiplier.

4. The optical filter assembly of claim 1 further comprising one or more interference filters.

5. The optical filter assembly of claim 4 wherein a first interference filter is associated with the light entry end of the light reflecting tube and a second interference filter is associated with the light detecting end of the light reflecting tube.

6. The optical filter assembly of claim 5 wherein a first interference filter is positioned between the afocal lens and the light reflective pipe and a second interference filter is positioned between the photocathode and the light reflective pipe.

7. The optical filter assembly of claim 4 wherein a first interference filter coating blocks energy incident at angles from 0 to 20 degrees and a second interference filter coating blocks energy incident at angles from 20 to 40 degrees.

8. The optical filter assembly of claim 1 wherein the afocal lens has a diameter larger than that of the detector.

9. The optical filter assembly of claim 1 further comprising a predetermined optical diameter, the predetermined optical diameter being about 1 inch.

10. The optical filter assembly of claim 1 wherein the afocal lens is comprised of a plurality of elements.

11. The optical filter assembly of claim 10 wherein the plurality of elements are selected from the group consisting of: fused silica, optical glass, colored filter glass or any combination thereof.

12. The optical filter assembly of claim 1 wherein the plurality of different reflective cylindrical shaped filter elements provide a change from optical density of about 1.0 to about 10 in about 10 nanometers.

13. The optical filter assembly of claim 1 wherein the plurality of different reflective cylindrical shaped filter elements further comprise a first filter element, a second filter element and a third filter element.

14. The optical filter assembly of claim 13, each of the filter elements being at least partially constructed from at least one member of the group essentially consisting of: doped Calcium Fluoride, a metal salt, colored glass, and any combinations thereof.

15. The optical filter assembly of claim 13, the first filter element being constructed at least in part from doped Calcium Fluoride, the second filter element being constructed at least in part of a metal salt, the third filter element being constructed at least in part of colored glass.

16. The optical filter assembly of claim 1 wherein the plurality of different reflective cylindrical shaped filter elements further comprise a first filter element, a second filter element, a third filter element and a fourth element.

17. The optical filter assembly of claim 16, each of the filter elements being at least partially constructed from at least one member of the group essentially consisting of: doped Calcium Fluoride, a metal salt, colored glass, and any combinations thereof.

18. The optical filter assembly of claim 16, the first and second filter elements being constructed at least in part from doped Calcium Fluoride, the third filter element being constructed at least in part of a metal salt, the fourth filter element being constructed at least in part of colored glass

19. An optical filter assembly for detecting a predetermined spectrum of light comprising:
a plurality of different reflective cylindrical shaped filter elements, each of the filter elements having reflective edges, the plurality of filter elements constructed and arranged to form a light reflective pipe, the light reflective pipe having a light entry end and a light detecting end;
a detector, the detector associated with the light detecting end; and
at least two interference filters;
the light reflecting pipe and the detector constructed and arranged so that on-axis light will travel directly through the filter elements to the detector and off-axis light will be reflected off of at least one of the silvered edges of at least one of the plurality of filter elements toward the detector, the optical filter having an angle of performance limited by the interference filters to plus or minus 40 degrees.
